# NEW EUROPEAN PATENT SPECIFICATION

(11) **EP 3 334 250 B2**
(45) Date of publication and mention of the opposition decision: **27.07.2022**
(45) Mention of the grant of the patent: 14.08.2019
(21) Application number: 17203474.6
(22) Date of filing: 24.11.2017
(51) Int. Cl.: H05B 6/78, H05B 6/80

(54) **HOUSEHOLD APPLIANCE WITH A MICROWAVE GENERATOR**
HAUSHALTSGERÄT MIT EINEM MIKROWELLENGENERATOR
APPAREIL MÉNAGER AVEC GÉNÉRATEUR DE MICRO-ONDES

(30) Priority: 09.12.2016 ES 201631568
(43) Date of publication of application: 13.06.2018
(73) Proprietor: BSH Hausgeräte GmbH, 81739 München (DE)
(72) Inventor: ALAMAN AGUILAR, Jorge, 50012 Zaragoza (ES); ALONSO LOZANO, Sergio, 50006 Zaragoza (ES); GIMENO ASIN, Carlos, 50015 Zaragoza (ES); GIMENO ASIN, Manuel, 50015 Zaragoza (ES); KORDT, Erik, 80686 München (DE); REQUENA MUNGUIRA, Jorge, 50003 Zaragoza (ES); RODRIGUEZ PASCUAL, Laura, 50018 Zaragoza (ES); SANCHEZ ESPARZA, Julio, 50004 Zaragoza (ES)

(56) References cited:
- WO-A1-02/069767
- US-A- 5 534 278
- US-A- 5 564 594

## Description

The invention relates to a household appliance with a microwave generator for generating microwaves to be introduced into a cooking chamber of the household appliance.

Household appliances with microwave generators such as microwave ovens are a well-known technology for cooking. Further, there are different technologies for food processing, which are intended to help a user to prepare food more easily and to achieve new possibilities in food preparations, such as food processors. For example the food processors can be configured as small appliances which make it possible to cut, slice, grind or mix food. There are also food processors which make it possible to cook the food. Such appliances are therefore useful in order to prepare different recipes.

Another technology with a completely different approach is 3D food printing. In general, 3D printing, i.e. three-dimensional printing, is a technology developed for manufacturing objects or pieces from successive layers of material. However, 3D printing becomes to be used in food applications also, in order to achieve shapes or structures which a food processor cannot prepare.

If the food processing technology and the 3D food printing technology are compared with each other, there are disadvantages associated with each one of these technologies. A food processor which is able to also able to cook food can be utilized for different recipes. However, the cooked food is provided without any special shape and in an homogenous way. In other words, the prepared dish has the same texture, the same composition and the same properties throughout its entirety.

On the other hand, a 3D food printer can deposit different ingredients in different parts of a dish. It is therefore possible to create different properties in the same dish. However, the food which has been deposited on a baking tray or the like by the food printer needs then to be cooked in the majority of cases. This makes the preparation of cooked food together with the utilization of a 3D food printer rather laborious. A prior art household appliance is disclosed in document US5564594.

It is therefore an object of the present invention to provide an improved household appliance of the initially mentioned kind.

This object is solved by a household appliances having the features of claim 1. Advantageous configurations with convenient further developments of the invention are specified in the dependent claims.

The household appliance according to the invention has a microwave generator. The microwave generator is configured to generate microwaves to be introduced into a cooking chamber of the household appliance. The household appliance further comprises food dispensing means with an outlet portion. Herein, the outlet portion is arranged within the cooking chamber. In this way the household appliance allows food to be introduced into the cooking chamber through the outlet portion of the food dispensing means. This food, which is deposited within the cooking chamber can be cooked by the microwaves generated by the microwave generator of the household appliance. Therefore, two functions are combined in the household appliance. The deposition of food within the cooking chamber and the cooking of the food by the microwaves. Thus, an improved household appliance is provided.

The outlet portion comprises a tube which is configured to reflect microwaves. This advantageous configuration is based on the finding that microwaves can affect the food inside the tube, before the food leaves the tube, if microwaves can penetrate into the tube. For example, the food traveling through the tube as a viscous material can be warmed by the microwaves, if the microwaves are not reflected by the tube. And the food or components of the food can harden as a consequence of being warmed. This applies for example to food or components such as eggs, dough or the like. However, it is difficult to make such hardened food pass through the tube and therefore to introduce the food into the cooking chamber.

If the tube is configured to reflect the microwaves, the tube prevents the food inside the tube from being warmed. Thus, the food can easily travel through the tube into the cooking chamber. Preventing the food inside the tube to be cooked or warmed by the microwaves prevents the rheological properties of the food to be modified in a way which makes it more difficult to deposit the food as desired within the cooking chamber.

In addition, one objective of the household appliance is to cook only the food which has been deposited in the cooking chamber through the outlet portion of the food dispensing means. However, it is very difficult to focus the microwaves provided by the microwave generator on a specific area of the cooking chamber. Such focusing of the microwaves to specific areas or portions does however not need to be implemented, if the tube is configured to reflect the microwaves. This allows to implement current microwave technology and simplifies the printing and cooking of food by means of the household appliance.

The tube body can be made from a metal, in particular from aluminium, steel or stainless steel, in order to reflect the microwaves.

Preferably however, the tube has a tube body with a metallic coating, wherein the metallic coating is configured to reflect the microwaves. With such a configuration the tube body can be made from an inexpensive material. Therefore the tube can be replaced at particularly low cost. This is based on the finding, that even though preventing food from hardening within the tube can be achieved by reflecting the microwaves, the formation of food residues in the area of the outlet portion cannot be completely inhibited. Further, cleaning the tube may seem rather time consuming for a user of the household appliance. It is therefore advantageous, if the tube having the tube body with the metallic coating can be changed readily.

Preferably, the metallic coating is provided on an outside of the tube body. This effectively prevents the microwaves from entering into the material of the tube body. Thus, the tube body cannot absorb the microwaves and cannot be heated by the microwaves. Consequently, a transmission of heat to the food passing through the outlet portion can particularly well be avoided, if the metallic coating is provided on the outside of the tube body.

Preferably, the tube body is made of plastic. A tube with such a tube body can be provided particularly easily and at low cost. Further, the tube can be readily provided with a desired shape such as the shape of a nozzle, if the tube body is made from plastic.

Preferably, the metallic coating is made from steel and/or aluminium. Such metallic materials are advantageous with respect to the aesthetics of the outlet portion and with regard to food safety. This is due to the fact that these materials are usually accepted by regulations or laws dealing with food safety and can therefore be utilized for components which get in contact with food. This is in particular valid, if the metallic coating is made from stainless steel.

Preferably, the tube has a coating on an inner surface of a tube body, wherein the inner surface is configured to be in contact with the food. Herein, the coating has bactericidal properties. Therefore bacteria can be prevented from growing within the tube. This contributes to a particularly hygienic configuration of the food dispensing means.

The coating with the bactericidal properties can comprise silver and/or copper and/or zinc. Further, the coating with bactericidal properties can comprise at least one oxide of silver and/or copper and/or zinc. Such materials can be readily applied to the inner surface of the tube body and are a very efficient in providing the bactericidal properties.

In particular, a physical vapor deposition (PVD) technique can be utilized to provide the metallic coating on the tube body to reflect the microwaves and/or to provide the coating acting as bactericide on the inner surface of the tube body. The PVD technology is a very good option as it allows to deposit a uniform layer, in particular metallic layer, on almost every substrate. Further, by utilizing a PVD technology the coating is only a few atoms thick. Consequently the consumption of material is particularly low. The PVD technology also allows to include functional materials such as silver as the bactericide layer or coating on the inner surface of the tube body.

Preferably, a carrier is arranged within the cooking chamber. Herein, the household appliance comprises means for moving the outlet portion relative to the carrier. This allows to deposit the food passing through the outlet portion at a number of desired locations on the carrier or on a plate or the like which can be placed on the carrier. This allows for a particularly good flexibility in depositing different ingredients of a dish within the cooking chamber. Also, desired shapes and structures of the food to be cooked within the cooking chamber by means of the microwaves can be readily obtained. Thus, the 3D food printing technique can be particularly well implemented in the household appliance.

The outlet portion can be configured to be moved along a first axis, and the carrier can be configured to be moved along a second axis, wherein the second axis forms an angle with the first axis. Thus, the movement of the carrier relative to the outlet portion and/or the movement of the outlet portion relative to the carrier can be achieved in a very simple manner. The angle can in be particular a right angle.

Alternatively or additionally, the outlet portion and/or the carrier can be configured to be moved along a first axis and a along second axis, wherein the first axis forms an angle with the second axis. The angle can in be particular a right angle. If only the outlet portion is configured to move along the first axis and along the second axis, the space requirements within the household appliance for a mechanism or system effecting the movement are particularly low.

Preferably, the household appliance comprises means for varying a height of the carrier within the cooking chamber. With such a configuration, a particularly high flexibility in creating different shapes of the food introduced into the cooking chamber through the outlet portion can be achieved.

Preferably, the household appliance comprises a food processing device configured to provide food to be dispensed by the food dispensing means as a viscous material. Herein, the food processing device comprises the food dispensing means. In this configuration the preparation of the food to be introduced into the cooking chamber through the outlet portion of the food dispensing means such as cutting, slicing, grinding, mixing and/or the like of the food can be readily accomplished by the household appliance. This enhances the efficiency of the household appliance with respect to food preparation.

Preferably, the household appliance comprises at least one heating element for heating the food within the cooking chamber. By including the at least one heating element into the household appliance, different textures of the food to be prepared within the cooking chamber in different areas of the food can be readily obtained. For example, the food can be crunchy outside and soft inside by applying heat to the outside by means of the at least one heating element. The heating element can comprise a heat source such as a heating coil, in particular together with means for conveying the heat into the cooking chamber such as a blower. Alternatively or additionally an infrared heat source can be provided as the at least one heating element.

The features and feature combinations mentioned above in the description as well as the features and feature combinations mentioned below in the description of figures and/or shown in the figures alone are usable not only in the respectively specified combination, but also in other combinations or alone, without departing from the scope of the invention. Thus, implementations are also to be considered as encompassed and disclosed by the invention, which are not explicitly shown in the figures or explained, but arise from and can be generated by separated feature combinations from the explained implementations.
Therefore also embodiments and feature combinations shall be considered as disclosed, which do not have all the features of an originally formulated independent claim. Moreover, implementations and feature combinations are to be considered as disclosed, in particular by the implementations set out above, which extend beyond or deviate from the feature combinations set out in the relations of the claims.

Further advantages, features and details of the invention are apparent from the claims, the following description of preferred embodiments as well as based on the drawings in which features having analogous functions are designated with the same reference signs. Therein show:
- Fig. 1: schematically and in a perspective view a microwave oven;
- Fig. 2: schematically a section view of the microwave oven according to fig. 1;
- Fig. 3: a nozzle of a food processing device of the microwave oven according to fig. 1, wherein a coating for microwave reflection and a coating with bactericidal properties are provided on the nozzle; and
- Fig. 4: a section view along a line IV - IV in fig. 3.

The indications "upper", "lower", "top", "front", "bottom", "floor", "horizontal", "vertical", "depth direction", "width direction", "height direction" and the like refer to the positions and orientations of the household appliance in its intended use position with respect to an observer located in front of the household appliance and regarding towards the household appliance.

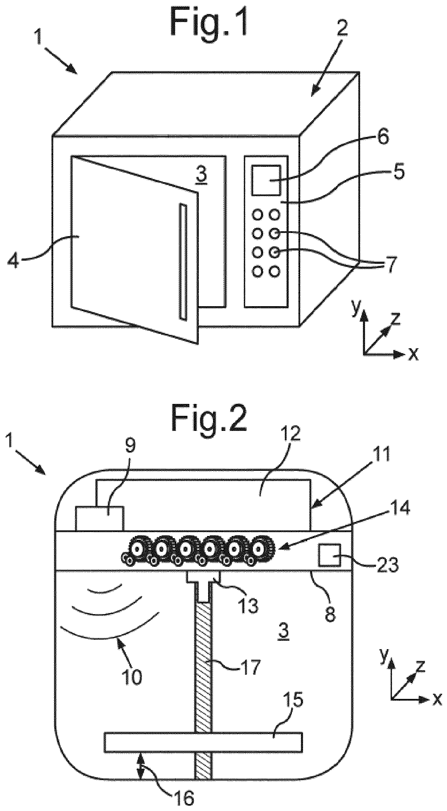

Fig. 1 shows a household appliance 1, which is configured as a microwave oven. The household appliance 1 comprises a housing 2 in which components of the household appliance 1 are arranged. The components are very schematically shown in fig. 2. A cooking chamber 3 is provided within the household appliance 1. The cooking chamber 3 can be closed to its front side by means of a door 4. The door 4 is shown partially opened in fig. 1. The door 4 can in particular be opened and closed by pivoting the door 4 about a pivot axis extending in a height direction y of the household appliance 1. In variants of the household appliance 1 the door 4 can also be opened and closed by pivoting the door 4 about a pivot axis extending in a width direction x of the household appliance.

Fig. 1 further shows schematically and by way of an example an operation module 5 of the household appliance 1, which can in particular comprise a display 6 and one or more control elements 7 which are not specified in greater detail.

As can be seen from fig. 2, above a ceiling or top wall 8 of the cooking chamber 3 a microwave generator 9 is arranged such as a magnetron. In variants of the household appliance 1 the microwave generator 9 can be arranged at another location. In operation of the household appliance 1 the microwave generator 9 generates microwaves 10 which are schematically represented in fig. 2. The microwaves 10 are introduced into the cooking chamber 3, if the microwave generator 9 is turned on.

The household appliance 1 further comprises a food printer which is configured for 3D printing of food within the cooking chamber 3. To these ends the household appliance 1 comprises a food processing device 11 with food dispensing means 12. The food dispensing means 12 comprise an outlet portion which can in particular be formed as a nozzle 13. Food which has been processed by an equipment for cutting, slicing, grinding and/or mixing food can be introduced into the cooking chamber 3 through the nozzle 13. The food processing device 11 preferably comprises a pump or the like for conveying the processed food to the nozzle 13. The nozzle 13 and the food dispensing means 12 can be part of an extruder of the food processing device 11.

Means 14 for moving the nozzle 13 relative to a carrier 15 or bed which is arranged within the cooking chamber 3 are very schematically represented in fig. 2. The means 14 can in particular be arranged within a top portion of the household appliance 1, for example above the top wall 8. The means 14 can provide different ways for achieving a movement of the outlet portion or nozzle 13 relative to the carrier 15. For example the nozzle 13 can be moved along a first axis extending in the width direction x and along a second axis extending in a depth direction z of the household appliance 1. In this case the carrier 15 or bed can be static.

However, the means 14 can also provide for moving the nozzle 13 only along one axis, for example an axis extending in the depth direction z or in the width direction x of the cooking chamber 3. In this case the carrier 15 or bed can move along the second axis which can in particular form a right angle with the first axis. Further, the household appliance 1 preferably comprises means for varying a height 16 of the carrier 15 within the cooking chamber 3. For example a screw 17 about which the carrier 15 can turn can be utilized to adjust the position of the carrier 15 in the height direction y of the household appliance 1.

The household appliance 1 allows to print food, for example on a plate arranged on the carrier 15 by moving the nozzle 13 subsequently to different positions of the carrier 15 or rather above the carrier 15. The food passing through the nozzle 13 enters the cooking chamber 3 and is at the same time cooked by the microwaves 10 which are introduced into the cooking chamber 3. To achieve this, the food printer comprising the nozzle 13 can extrude the food as a viscous material such as a liquid or pasty material.

However, the microwaves 10 which are present in the cooking chamber 3 could affect the food inside the nozzle 13. For example pasty material or viscous material within the nozzle 13 can harden, if it is cooked by the microwaves 10. This is in particular the case for viscous food material containing eggs such as dough or the like. But it is difficult for the food printer to extrude food as solid material. Therefore, if such pasty or viscous food material hardens within the nozzle 13, the food cannot readily be extruded through the nozzle 13.

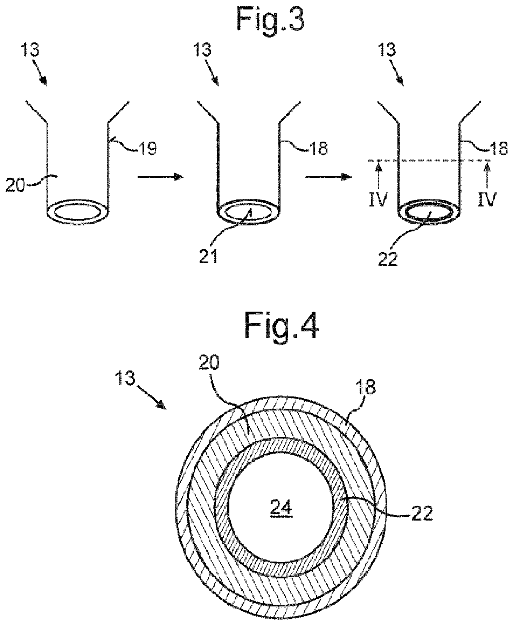

In order to prevent the microwaves 10 from affecting food inside the nozzle 13 the nozzle 13 is coated with a thin metallic layer or coating 18 (see fig. 3). Fig. 3 shows the process of depositing the coating 18 on an outside 19 of a tube body 20 of the nozzle 13. The representation on the left in fig. 3 shows the original nozzle 13 with the tube body 20 before the application of the metallic coating 18. The representation in the middle of fig. 3 shows the nozzle 13 with the metallic coating 18 on the outside 19 of the tube body 20. This metallic layer or coating 18 reflects the microwaves 10. Consequently, the food inside the nozzle 13 does not warm up, even though the microwaves 10 are present within the cooking chamber 3.

For coating the tube body 20, which can in particular be made from plastic, a physical vapor deposition (PVD) technique can be utilized. This leads to the formation of a very thin layer or coating 18 on the outside 19 of the tube body 20. For example steel, in particular stainless steel, and/or aluminium can be utilized as the metallic coating 18, preferably deposited by physical vapor deposition.

The tube body 20 of the nozzle 13 further comprises an inner surface 21. The representation in the middle of fig. 3 shows the nozzle 13 before this inner surface 21 of the tube body 20 has been provided with a further coating 22. The nozzle 13 with the further coating 22 on the inner surface 21 is shown in the representation on the right in fig. 3.

The further coating 22 preferably has bactericidal properties. As the further coating 22 for example silver, copper, zinc and their oxides can be utilized. The representation on the right in fig. 3 shows the nozzle 13, wherein the outside 19 of the tube body 20 is coated with the metallic coating 18, and the inner surface 21 is coated with the further coating 22 which acts as a bactericide. For example, silver as bactericide can be applied by physical vapor deposition to be prevent bacteria from growing inside the nozzle 13.

The representation of the nozzle 13 in fig. 3 is only schematic. Preferably all parts of the food dispensing means 12, which are arranged within the cooking chamber 3 are coated on the outside 19 with the metallic coating 18 for reflecting the microwaves 10.

As can be seen from fig. 2, the household appliance 1 can further comprise a heating element 23 to provide a source for convective heat and/or infrared radiation. By means of such a heating element 23 the food which is cooked inside the cooking chamber 3 by means of the microwaves 10 can also be provided with a desired texture such as a crunchy outside and a soft texture inside.

With the tube body 20 being made form plastic the nozzle 13 can be provided as a particularly cheap component. Further, the nozzle 13 is preferably detachably arranged at the food dispensing means 12. This makes it possible to change the nozzle 13 after a certain number of cycles during which food has been printed and cooked within the cooking chamber 3. Thus the degradation of the material due to an incorrect cleaning process can be avoided.

Fig. 4 shows a section view of the nozzle 13. Accordingly, the metallic coating 18 reflects the microwaves 10 before they can pass through the tube body 20. It is therefore avoided that the tube body 20 absorbs the microwaves 10 and gets heated. However, if the further coating 22 is made from a metallic material which has preferably bactericidal properties, even such a layer can prevent the microwaves 10 from entering a cavity 24 of the nozzle 13. Through this cavity 24 the processed food passes before leaving the nozzle 13.

As nozzles 13 made from plastic material already exist, it is particularly easy to provide the nozzle 13 shown in fig. 3 and fig. 4. It is sufficient to provide the coatings 18, 22 on the outside 19 and the inner surface 21 of the tube body 20, respectively.

One specific advantage of the household appliance 1 with the coated nozzle 13 is that the food inside the nozzle 13 is prevented from being warmed by the microwaves 10. If the nozzle 13 was warmed by the microwaves 10, food within the cavity 24 could be cooked and therefore the rheological properties of the food could be modified in a way to make it difficult to deposit the food leaving the nozzle 13 as desired within the cooking chamber 3. Further, the bactericide coating 22 prevents bacteria from growing inside the nozzle 13. This improves the hygiene and the performance of the household appliance 1.

### List of Reference Signs

- 1: household appliance
- 2: housing
- 3: cooking chamber
- 4: door
- 5: operation module
- 6: display
- 7: control element
- 8: top wall
- 9: microwave generator
- 10: microwaves
- 11: food processing device
- 12: food dispensing means
- 13: nozzle
- 14: means
- 15: carrier
- 16: height
- 17: screw
- 18: coating
- 19: outside
- 20: tube body
- 21: inner surface
- 22: coating
- 23: heating element
- 24: cavity

## Claims

1. Household appliance (1) with a microwave generator (9) for generating microwaves (10) to be introduced into a cooking chamber (3) of the household appliance (1), wherein the household appliance (1) comprises food dispensing means (12) with an outlet portion (13), wherein the outlet portion (13) is arranged within the cooking chamber (3), **characterized in that** the outlet portion (13) comprises a tube which is configured to reflect microwaves (10).

2. Household appliance (1) according to claim 1, **characterized in that** the tube has a tube body (20) with a metallic coating (18), wherein the metallic coating (18) is configured to reflect the microwaves (10).

3. Household appliance (1) according to claim 2, **characterized in that** the metallic coating (18) is provided on an outside (19) of the tube body (20) which is in particular made of plastic.

4. Household appliance (1) according to claim 2 or 3, **characterized in that** the metallic coating is made from steel, in particular stainless steel, and/or aluminium.

5. Household appliance (1) according to any one of claims 1 to 4, **characterized in that** the tube has a coating (22) on an inner surface (21) of a tube body (20), wherein the inner surface (21) is configured to be in contact with the food, and wherein the coating (22) has bactericidal properties.

6. Household appliance (1) according to claim 5, **characterized in that** the coating (22) with the bactericidal properties comprises silver and/or copper and/or zinc and/or at least one oxide of silver and/or copper and/or zinc.

7. Household appliance (1) according to any one of claims 1 to 6, **characterized in that** a carrier (15) is arranged within the cooking chamber (3), wherein the household appliance (1) comprises means (14) for moving the outlet portion (13) relative to the carrier (15).

8. Household appliance (1) according to claim 7, **characterized in that** the outlet portion (13) is configured to move along a first axis (x) and the carrier (15) is configured to move along a second axis (z) and/or the outlet portion (13) and/or the carrier (15) is configured to move along a first axis (x) and along a second axis (z), wherein the second axis (z) forms an angle with the first axis (x).

9. Household appliance (1) according to claim 7 or 8, **characterized by** means for varying a height (16) of the carrier (15) within the cooking chamber (3).

10. Household appliance (1) according to any one of claims 1 to 9, **characterized in that** the household appliance (1) comprises a food processing (11) device configured to provide the food to be dispensed by the food dispensing (12) means as a viscous material, wherein the food processing (11) device comprises the food dispensing means (12).

11. Household appliance (1) according to any one of claims 1 to 10, **characterized in that** the household appliance (1) comprises at least one heating element (23) for heating the food within the cooking chamber (3).

## Patentansprüche

1. Haushaltsgerät (1) mit einem Mikrowellengenerator (9) zum Erzeugen von Mikrowellen (10), die in einen Garraum (3) des Haushaltsgeräts (1) hineingeleitet werden sollen, wobei das Haushaltsgerät (1) ein Lebensmittelabgabemittel (12) mit einem Auslassabschnitt (13) umfasst, wobei der Auslassabschnitt (13) in dem Garraum (3) angeordnet ist, **dadurch gekennzeichnet, dass** der Auslassabschnitt (13) ein Rohr umfasst, das so konfiguriert ist, dass es Mikrowellen (10) reflektiert.

2. Haushaltsgerät (1) nach Anspruch 1, **dadurch gekennzeichnet, dass** das Rohr einen Rohrkörper (20) mit einer Metallbeschichtung (18) aufweist, wobei die Metallbeschichtung (18) so konfiguriert ist, dass sie die Mikrowellen (10) reflektiert.

3. Haushaltsgerät (1) nach Anspruch 2, **dadurch gekennzeichnet, dass** die Metallbeschichtung (18) auf einer Außenseite (19) des Rohrkörpers (20) vorgesehen ist, der insbesondere aus Kunststoff hergestellt ist.

4. Haushaltsgerät (1) nach Anspruch 2 oder 3, **dadurch gekennzeichnet, dass** die Metallbeschichtung aus Stahl, insbesondere Edelstahl, und/oder Aluminium hergestellt ist.

5. Haushaltsgerät (1) nach einem der Ansprüche 1 bis 4, **dadurch gekennzeichnet, dass** das Rohr an einer Innenfläche (21) eines Rohrkörpers (20) eine Beschichtung (22) aufweist, wobei die Innenfläche (21) so konfiguriert ist, dass sie sich mit dem Lebensmittel in Kontakt befindet, und wobei die Beschichtung (22) bakterizide Eigenschaften aufweist.

6. Haushaltsgerät (1) nach Anspruch 5, **dadurch gekennzeichnet, dass** die Beschichtung (22) mit den bakteriziden Eigenschaften Silber und/oder Kupfer und/oder Zink und/oder mindestens ein Silber- und/oder Kupfer- und/oder Zinkoxid umfasst.

7. Haushaltsgerät (1) nach einem der Ansprüche 1 bis 6, **dadurch gekennzeichnet, dass** in dem Garraum (3) ein Träger (15) angeordnet ist, wobei das Haushaltsgerät (1) Mittel (14) zum Bewegen des Auslassabschnitts (13) in Bezug auf den Träger (15) umfasst.

8. Haushaltsgerät (1) nach Anspruch 7, **dadurch gekennzeichnet, dass** der Auslassabschnitt (13) so konfiguriert ist, dass er sich an einer ersten Achse (x) entlang bewegt, und der Träger (15) so konfiguriert ist, dass er sich an einer zweiten Achse (z) entlang bewegt, und/oder der Auslassabschnitt (13) und/oder der Träger (15) so konfiguriert ist, dass er sich an einer ersten Achse (x) und an einer zweiten Achse (z) entlang bewegt, wobei die zweite Achse (z) mit der ersten Achse (x) einen Winkel bildet.

9. Haushaltsgerät (1) nach Anspruch 7 oder 8, **gekennzeichnet durch** Mittel zum Verändern einer Höhe (16) des Trägers (15) in dem Garraum (3).

10. Haushaltsgerät (1) nach einem der Ansprüche 1 bis 9, **dadurch gekennzeichnet, dass** das Haushaltsgerät (1) eine Lebensmittelverarbeitungsvorrichtung (11) umfasst, die so konfiguriert ist, dass sie das Lebensmittel, das von dem Lebensmittelabgabemittel (12) abgegeben werden soll, als dickflüssiges Material bereitstellt, wobei die Lebensmittelverarbeitungsvorrichtung (11) das Lebensmittelabgabemittel (12) umfasst.

11. Haushaltsgerät (1) nach einem der Ansprüche 1 bis 10, **dadurch gekennzeichnet, dass** das Haushaltsgerät (1) mindestens ein Heizelement (23) zum Erhitzen des Lebensmittels in dem Garraum (3) umfasst.

## Revendications

1. Appareil ménager (1) avec un générateur de micro-ondes (9) pour la génération de micro-ondes (10) à introduire dans une chambre de cuisson (3) de l'appareil ménager (1), dans lequel l'appareil ménager (1) comprend des moyens de distribution de nourriture (12) avec une partie de sortie (13), dans lequel la partie de sortie (13) est disposée à l'intérieur de la chambre de cuisson (3), **caractérisé en ce que** la partie de sortie (13) comprend un tube configuré afin de réfléchir les micro-ondes (10).

2. Appareil ménager (1) selon la revendication 1, **caractérisé en ce que** le tube possède un corps de tube (20) avec un revêtement métallique (18), dans lequel le revêtement métallique (18) est configuré afin de réfléchir les micro-ondes (10).

3. Appareil ménager (1) selon la revendication 2, **caractérisé en ce que** le revêtement métallique (18) est prévu sur un côté extérieur (19) du corps de tube (20) en particulier en plastique.

4. Appareil ménager (1) selon la revendication 2 ou 3, **caractérisé en ce que** le revêtement métallique est en acier, en particulier en acier inoxydable et/ou en aluminium.

5. Appareil ménager (1) selon l'une quelconque des revendications 1 à 4, **caractérisé en ce que** le tube possède un revêtement (22) sur une surface intérieure (21) d'un corps de tube (20), dans lequel la surface intérieure (21) est configurée afin d'être en contact avec la nourriture, et dans lequel le revêtement (22) possède des propriétés bactéricides.

6. Appareil ménager (1) selon la revendication 5, **caractérisé en ce que** le revêtement (22) aux propriétés bactéricides comprend de l'argent et/ou du cuivre et/ou du zinc et/ou au moins un oxyde d'argent et/ou de cuivre et/ou de zinc.

7. Appareil ménager (1) selon l'une quelconque des revendications 1 à 6, **caractérisé en ce qu'**un support (15) est disposé à l'intérieur de la chambre de cuisson (3), dans lequel l'appareil ménager (1) comprend des moyens (14) pour déplacer la partie de sortie (13) par rapport au support (15).

8. Appareil ménager (1) selon la revendication 7, **caractérisé en ce que** la partie de sortie (13) est configurée afin de se déplacer le long d'un premier axe (x) et le support (15) est configuré afin de se déplacer le long d'un deuxième axe (z) et/ou la partie de sortie (13) et/ou le support (15) est configuré afin de se déplacer le long d'un premier axe (x) et le long d'un deuxième axe (z), dans lequel le deuxième axe (z) forme un angle avec le premier axe (x).

9. Appareil ménager (1) selon la revendication 7 ou 8, **caractérisé par** des moyens afin de modifier une hauteur (16) du support (15) à l'intérieur de la chambre de cuisson (3).

10. Appareil ménager (1) selon l'une quelconque des revendications 1 à 9, **caractérisé en ce que** l'appareil ménager (1) comprend un dispositif de traitement de nourriture (11) configuré afin de fournir la nourriture à distribuer par les moyens de distribution de nourriture (12) sous forme d'un matériau visqueux, dans lequel le dispositif de traitement de nourriture (11) comprend les moyens de distribution de nourriture (12).

11. Appareil ménager (1) selon l'une quelconque des revendications 1 à 10, **caractérisé en ce que** l'appareil ménager (1) comprend au moins un élément chauffant (23) pour chauffer la nourriture à l'intérieur de la chambre de cuisson (3).
